# FASCICULE DE BREVET EUROPEEN

(11) **EP 4 022 187 B1**
(45) Date de publication et mention de la délivrance du brevet: **13.12.2023**
(21) Numéro de dépôt: 20761840.6
(22) Date de dépôt: 26.08.2020
(51) Int. Cl.: F15B 13/08, F04F 5/54, F04F 5/20, F04F 5/44

(54) **DISPOSITIF FLUIDIQUE POUR PREHENSION PAR LE VIDE**
FLUIDVORRICHTUNG ZUM SAUGGREIFEN
FLUID DEVICE FOR SUCTION GRIPPING

(30) Priorité: 27.08.2019 FR 1909441
(43) Date de publication de la demande: 06.07.2022
(73) Titulaire: COVAL, 26120 Montelier (FR)
(72) Inventeur: BUFFAT, Emmanuel, 07300 Mauves (FR); JOGUET, Loïc, 07130 Soyons (FR); CECCHIN, Michel, 26120 Montelier (FR); MILHAU, Pierre, 26300 Chatuzange-le-Goubet (FR)
(74) Mandataire: Lavialle, Bruno François Stéphane
(86) Numéro de dépôt international: PCT/EP2020/073900
(87) Numéro de publication internationale: WO 2021/037938

(56) Documents cités:
- EP-A2- 0 728 970
- EP-A2- 0 860 609
- WO-A1-98/04840
- WO-A1-2015/169830
- DE-A1- 3 818 380
- DE-C2- 3 818 380
- JP-A- H08 100 799
- US-A- 4 247 133
- US-A- 6 053 198

## Description

La présente invention concerne le domaine de la distribution fluidique, notamment pour la manutention par le vide.

L'invention concerne plus particulièrement un dispositif de distribution fluidique pour composants pneumatiques comme des éjecteurs ou des pompes à vide Venturi.

### ARRIERE PLAN DE L'INVENTION

Les éjecteurs sont couramment utilisés pour fournir le vide nécessaire à des opérations de manipulation par aspiration et plus particulièrement aux déplacements d'objets difficiles à saisir ou fragiles.

Un éjecteur comprend schématiquement un conduit comportant une buse de type Venturi ayant :
- un orifice d'entrée destiné à être raccordé à un circuit d'alimentation en air comprimé,
- un orifice de sortie d'un jet d'air accéléré par la buse, et
- un orifice d'aspiration, agencé entre l'orifice d'entrée et l'orifice de sortie, par lequel une aspiration est créée par le jet d'air circulant entre l'orifice d'entrée et l'orifice de sortie.

L'orifice d'aspiration est relié à au moins une ventouse agencée pour être appliquée sur l'objet à saisir.

Les dispositifs de préhension par le vide comprennent généralement une pluralité de ventouses reliées à des orifices d'aspiration d'une pluralité d'éjecteurs. De l'air comprimé est acheminé vers chacun des éjecteurs par des conduits d'alimentation individuels reliés à l'orifice d'entrée desdits éjecteurs. Le nombre de conduits étant lié au nombre d'éjecteurs, le circuit d'alimentation en air comprimé du dispositif est d'autant plus complexe et volumineux que le nombre d'éjecteurs est important, ce qui peut notamment rendre compliqué le remplacement des éjecteurs à des fins de maintenance ou de réparation.

On connaît des dispositifs de préhension par le vide comprenant plusieurs éjecteurs reçus sur une base unique de réception formant un système de retenue et de changement rapide des éjecteurs. A l'intérieur de la base de réception s'étend un circuit de distribution relié à une source d'air comprimé et sur lequel est branché chacun des éjecteurs. Ces dispositifs sont connus du document WO 98/04840 A1 et EP 0 728 970 A2.

De tels dispositifs permettent de réduire le nombre de conduits nécessaires à l'alimentation en air comprimé des éjecteurs et de faciliter le remplacement desdits éjecteurs. Néanmoins, ils présentent l'inconvénient de ne pouvoir recevoir qu'un nombre prédéfini d'éjecteurs, ce qui peut notamment entraîner l'acquisition d'une base de plus grande capacité lorsqu'un ou plusieurs éjecteurs doivent être ajoutés en vue de faire évoluer une installation de manutention par le vide.

D'autres dispositifs sont connus des documents JP H08 100799 A, EP 0 860 609 A2, WO 2015/169830 A1 et DE 38 18 380 A1.

### OBJET DE L'INVENTION

L'invention a donc pour objet de proposer un dispositif fluidique modulaire permettant d'obvier au moins en partie aux inconvénients précités.

### RESUME DE L'INVENTION

A cet effet, on propose, selon l'invention, un dispositif fluidique comprenant une pluralité d'embases individuelles et une pluralité de modules fonctionnels fluidiques fixés chacun sur une des embases individuelles, chaque embase individuelle comportant :
- deux faces latérales parallèles par lesquelles les embases sont adaptées à être accolées les unes aux autres de telle manière que lorsque les embases sont accolées, deux des embases aient une face latérale libre ;
- un canal primaire de transport de fluide traversant l'embase pour déboucher sur les deux faces latérales en des positions relatives identiques ;
- une face avant le long de laquelle s'étend le module afin de raccorder un canal d'entrée dudit module à un canal secondaire s'étendant dans l'embase depuis la face avant et débouchant dans le canal primaire ;
- un clapet anti-retour ayant un état ouvert et un état fermé dans lequel le clapet est adapté à obturer le canal secondaire lorsque l'embase est dépourvue de module ; et
- une face supérieure depuis laquelle s'étend un canal tertiaire débouchant dans le canal primaire.

Selon l'invention, le dispositif comprend des moyens de fixation des embases l'une à l'autre, des moyens de raccordement étanche des canaux primaires entre eux, des moyens de raccordement étanche d'une extrémité du canal primaire débouchant sur l'une des faces latérales libres à une source de fluide sous pression pour alimenter les modules, et des moyens de raccordement étanches de l'extrémité du canal tertiaire débouchant sur la face supérieure de l'embase à une source de fluide sous pression pour alimenter le module.

Le nombre d'embases d'un tel dispositif peut ainsi être adapté au nombre de modules nécessaires à une installation fluidique et il est possible d'ajouter ou de retirer une embase du dispositif en fonction de l'évolution du nombre d'éjecteurs de l'installation. Le clapet permet, lorsqu'un module est retiré de son embase, de continuer à alimenter en fluide sous pression les autres modules.

De manière particulière, le dispositif fluidique comprend des moyens d'obturation étanche de l'extrémité du canal primaire débouchant sur la face latérale libre dépourvue des moyens de raccordement.

De manière particulière, le dispositif comprend des moyens d'obturation étanche des extrémités des canaux tertiaires débouchant sur les faces supérieures des embases.

De manière particulière, une face arrière des embases et/ou les faces latérales comprennent des moyens de fixation à un bâti.

Selon un mode de réalisation de l'invention, les modules sont fixés aux embases par vissage.

Selon un autre mode de réalisation de l'invention, les modules sont fixés aux embases par encliquetage.

De manière particulière, au moins l'un des modules est un éjecteur.

De manière particulière, les embases sont structurellement identiques.

L'invention concerne également un dispositif fluidique comprenant une embase individuelle et un unique module fonctionnel fluidique fixé sur l'embase individuelle comportant :
- deux faces latérales parallèles par lesquelles l'embase est adaptée à être accolée à deux autres embases ;
- un canal primaire de transport de fluide traversant l'embase pour déboucher sur les deux faces latérales en des positions identiques ;
- une face avant le long de laquelle s'étend le module afin de raccorder un canal d'entrée dudit module à un canal secondaire s'étendant dans l'embase depuis la face avant et débouchant dans le canal primaire ;
- une face supérieure depuis laquelle s'étend un canal tertiaire débouchant dans le canal primaire ;
- des moyens de fixation de l'embase à au moins une autre embase ; et
- des moyens de raccordement étanche d'une extrémité du canal primaire débouchant sur l'une des faces latérales à une source de fluide sous pression pour alimenter le module.

Selon l'invention, l'embase comprend un clapet anti-retour ayant un état ouvert et un état fermé dans lequel le clapet obture le canal secondaire lorsque l'embase est dépourvue de module. Un tel clapet permet, lorsqu'un module est retiré de son embase, de continuer à alimenter en fluide sous pression les autres modules.

De manière particulière, le dispositif comprend des moyens de raccordement étanche d'une extrémité du canal primaire débouchant sur l'une des faces latérales à une source de fluide sous pression pour alimenter le module.

De manière particulière, le dispositif comprend des moyens d'obturation étanche de l'extrémité du canal primaire débouchant sur la face latérale dépourvue des moyens de raccordement.

De manière particulière, le dispositif comprend des moyens d'obturation étanche de l'extrémité du canal tertiaire débouchant sur la face supérieure de l'embase.

De manière particulière, le dispositif comprend des moyens d'obturation étanche des extrémités du canal primaire débouchant sur les faces latérales.

De manière particulière, une face arrière de l'embase et/ou les faces latérales comprennent des moyens de fixation à un bâti.

Selon un mode de réalisation de l'invention, le module est fixé à l'embase par vissage.

Selon un autre mode de réalisation de l'invention, le module est fixé à l'embase par encliquetage.

De manière particulière, le module est un éjecteur.

### BREVE DESCRIPTION DES DESSINS

L'invention sera mieux comprise à la lumière de la description qui suit, laquelle est purement illustrative et non limitative, et doit être lue en regard des dessins annexés, parmi lesquels :
[Fig.1A] la figure 1A est une vue en perspective isométrique d'un dispositif fluidique selon un premier mode de réalisation de l'invention ;
[Fig.1B] la figure 1B est une vue éclatée d'une partie du dispositif illustré à la figure 1A selon une première orientation ;
[Fig.1C] la figure 1C est une vue éclatée d'une partie du dispositif illustré à la figure 1A selon une deuxième orientation ;
[Fig.1D] la figure 1D est une vue éclatée du dispositif illustré à la figure 1A ;
[Fig.2A] la figure 2A est une vue en perspective isométrique d'une variante du dispositif illustré à la figure 1A ;
[Fig.2B] la figure 2B est une vue éclatée du dispositif illustré à la figure 2A ;
[Fig.2C] la figure 2C est une vue en coupe détaillée d'un des moyens de fixation par encliquetage de l'éjecteur sur l'embase, le verrou étant en position basse ;
[Fig.2D] la figure 2D est une vue similaire à celle la figure 2C, le verrou étant en position haute ;
[Fig.3] la figure 3 est une vue en perspective isométrique d'un dispositif fluidique selon un deuxième mode de réalisation de l'invention.

### DESCRIPTION DETAILLEE DE L'INVENTION

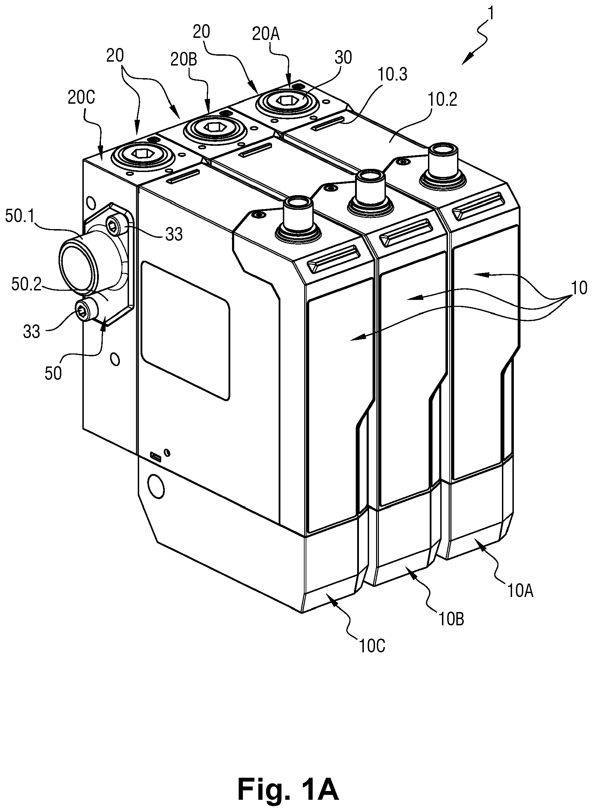

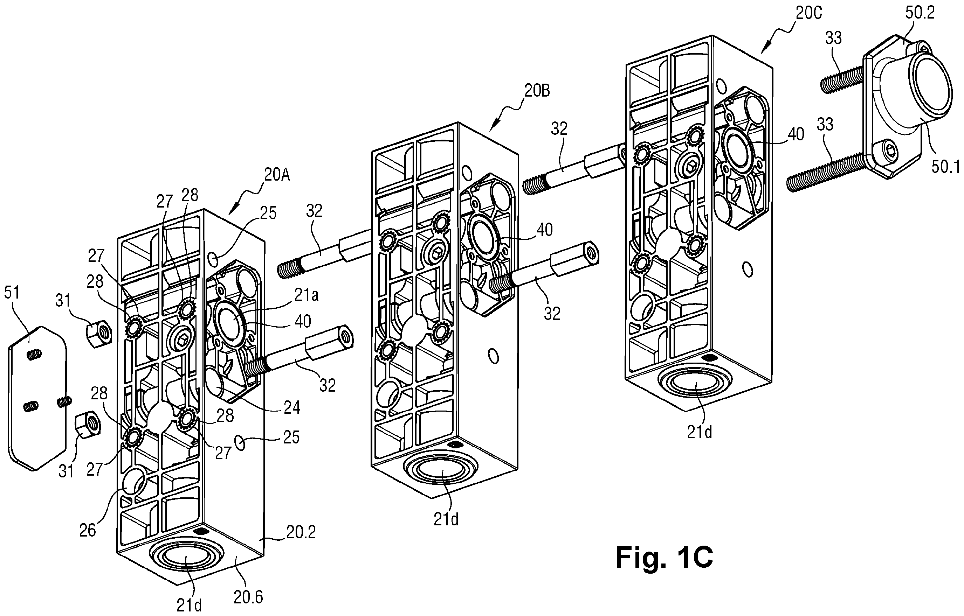

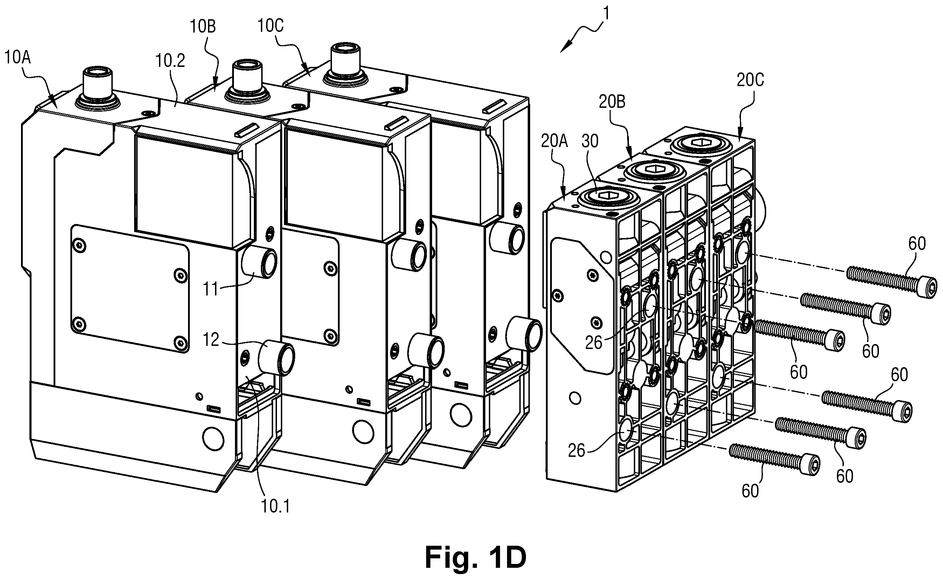

En référence à la figure 1A à 1D, un dispositif fluidique généralement désigné en 1, selon un premier mode de réalisation de l'invention, comprend trois éjecteurs 10 fixés chacun sur une embase 20 individuelle.

Les éjecteurs 10 et les embases 20 sont identiques entre eux et sont distingués sur les figures par l'adjonction de la lettre A, B et C.

Chaque éjecteur 10 présente un corps sensiblement en forme de parallélépipède rectangle à l'intérieur de laquelle s'étend un conduit. Le conduit comporte une buse de type Venturi ayant :
- un orifice d'entrée 11 dont le bord s'étend en saillie d'une face arrière 10.1 de l'éjecteur 10 et est destiné à être raccordé à un circuit d'alimentation en air comprimé, et
- un orifice d'aspiration 12 dont le bord s'étend en saillie de la surface arrière 10.1 de l'éjecteur 10 et est destiné à être raccordé à un circuit d'aspiration relié à au moins une ventouse.

Les éjecteurs 10A, 10B et 10C sont donc identiques les uns aux autres.

Chaque embase 20 comprend un corps en forme de parallélépipède rectangle comportant deux faces latérales parallèles et opposées l'une à l'autre, à savoir une première face latérale 20.1 et une deuxième face latérale 20.2, entre lesquelles s'étend un canal primaire 21a de transport de fluide. Le canal primaire 21a est sensiblement rectiligne et débouche sur les faces latérales 20.1, 20.2 de l'embase 20 en des positions sensiblement identiques.

Parallèlement au canal primaire 21a s'étendent deux premiers trous 24 lisses de passage de vis agencés pour permettre de fixer les embases 20 entre elles, et deux deuxièmes trous 25 lisses de passage de vis agencés pour permettre de fixer l'embase 20 à un bâti en maintenant accolée l'une des faces latérales 20.1, 20.2 de l'embase 20 à une face du bâti. Les premiers trous 24 comportent à chaque extrémité un lamage destiné à recevoir un écrou ou une portion d'une tête de vis engagée dans l'embase 20 adjacente, les lamages étant de diamètre et de profondeur sensiblement identiques. Les lamages débouchant sur la première face latérale 20.1 diffèrent de ceux débouchant sur la deuxième face latérale 20.2 en ce qu'ils comprennent des butées en rotation de l'écrou ou de la tête de vis. L'écrou et la tête des vis ayant une forme hexagonale, les lamages débouchant sur la première face latérale 20.1 comprennent ici deux faces parallèles en regard pour s'étendre en regard de deux faces de l'écrou ou de la tête de vis.

L'embase 20 comprend également un canal secondaire 21b de transport de fluide s'étendant depuis une face avant 20.3 du corps de l'embase 20 pour déboucher dans le canal primaire 21a. Le canal secondaire 21b est sensiblement perpendiculaire au canal primaire 21a et à la face avant 20.3 de l'embase 20. L'extrémité libre du canal secondaire 21b débouchant sur la face avant 20.3 de l'embase 20 est agencée de façon à recevoir de manière étanche le bord de l'orifice d'entrée 11 d'un des éjecteurs 10.

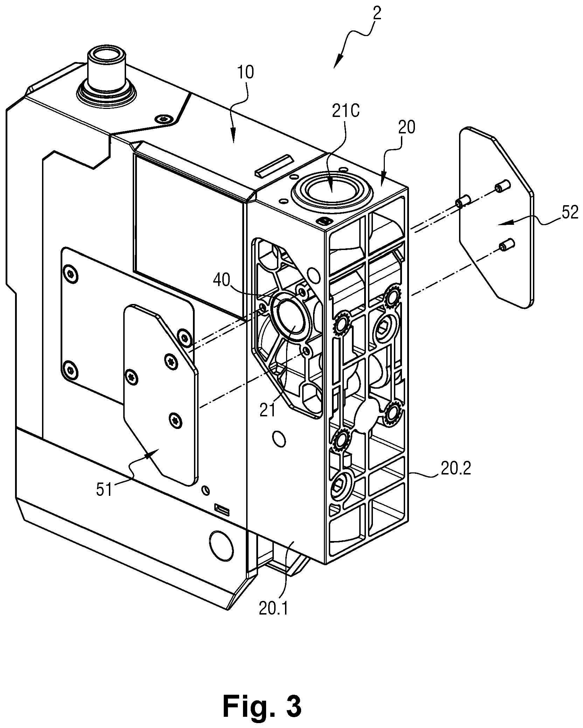

L'embase 20 comprend aussi, comme visible à la figure 3, un canal tertiaire 21c de transport de fluide s'étendant depuis une face supérieure 20.4 de l'embase 20 pour déboucher dans le canal primaire 21a. Le canal tertiaire 21c est sensiblement perpendiculaire au canal primaire 21a, au canal secondaire 21b et à la face supérieure 20.4 du corps de l'embase 20. L'extrémité libre du canal tertiaire 21c débouchant sur la face supérieure 20.4 de l'embase 20 est pourvue d'un obturateur 30 étanche de forme cylindrique.

L'embase 20 comprend en outre un canal quaternaire 21d s'étendant entre la face avant 20.3 du corps de l'embase 20 et une face inférieure 20.6 dudit corps. L'extrémité du canal quaternaire 21d débouchant sur la face avant 20.3 de l'embase 20 est agencée de façon à recevoir de manière étanche le bord de l'orifice d'aspiration 12 d'un des éjecteurs 10. L'extrémité du canal quaternaire 21d débouchant sur la face inférieure 20.6 de l'embase 20 est agencée de façon à pouvoir être raccordé au circuit d'aspiration.

L'embase 20 comporte par ailleurs deux trous 26 lisses de passage de vis s'étendant entre la face avant 20.3 du corps de l'embase 20 et une face arrière 20.5 parallèle à la face avant 20.3, et agencés pour pouvoir fixer l'un des éjecteurs 10 sur l'embase 20 en maintenant accolée la face arrière 10.1 de l'éjecteur 10 à la face avant 20.3 de l'embase 20.

L'embase 20 comporte aussi quatre cavités 27 cylindriques s'étendant depuis la face arrière 20.5 de l'embase 20 selon un axe perpendiculaire à ladite face arrière 20.5, et dans lesquelles sont agencés des inserts 28 filetés permettant notamment de visser le corps de l'embase 20 au bâti en maintenant accolée la face arrière 20.5 de l'embase 20 à la face de réception du bâti par l'intermédiaire des vis 60.

Les embases 20A, 20B et 20C sont identiques les unes aux autres.

Le dispositif 1 comprend un jeu d'éléments de fixation permettant de maintenir accolées les embases 20A, 20B, 20C entre elles. Le jeu comprend deux écrous 31, quatre premières vis 32 et deux deuxièmes vis 33, les premières vis 32 étant pourvues d'une tête hexagonale creuse filetée dans laquelle les premières vis 32 et deuxièmes vis 33 peuvent se visser. La hauteur des têtes hexagonales est légèrement inférieure à deux fois la profondeur des lamages des trous 24.

Dans un premier temps, les écrous 31 sont logés dans les lamages des trous 24 débouchant sur la première face latérale 20.1 de l'embase 20A dans lesquels ils sont bloqués en rotation. Deux premières vis 32 sont alors engagées dans les trous 24 de l'embase 20A pour être vissées dans les écrous 31, les têtes des deux premières vis 32 s'étendant en saillie de la deuxième face latérale 20.2 de l'embase 20A.

La première face latérale 20.1 de l'embase 20B est ensuite accolée à la deuxième face latérale 20.2 de l'embase 20A, une portion supérieure des têtes des deux premières vis 32 venant se logeant dans les lamages de la première face latérale 20.1 de l'embase 20B pour être bloquée en rotation.

Deux autres premières vis 32 sont alors engagées dans les trous 24 de l'embase 20B pour être vissées dans les têtes des deux premières vis 32 logées dans les trous 24 de l'embase 20A, les têtes des deux premières vis 32 engagées dans les trous 24 de l'embase 20B s'étendant en saillie de la deuxième face latérale 20.2 de l'embase 20B.

La première face latérale 20.1 de l'embase 20C est ensuite accolée à la deuxième face latérale 20.2 de l'embase 20B, une portion supérieure des têtes des deux premières vis se logeant dans les lamages de la première face latérale 20.1 de l'embase 20C pour être bloquée en rotation.

Les deux deuxième vis 33 sont engagées dans les trous 24 de l'embase 20C pour être vissées dans les têtes des deux premières vis 32 logées dans les trous 24 de l'embase 20C.

Par ailleurs, le dispositif 1 comprend un jeu d'éléments de liaison permettant de raccorder de manière étanche les canaux primaires des embases 20A, 20B, 20C entre eux. Le jeu comprend six joints 40 d'étanchéité, toriques, destinés à être logés dans une gorge agencée à chaque extrémité libre des canaux primaires 21a, et deux rondelles 41 destinées à être vissées sur les premières faces latérales 20.1 des embases 20B et 20C coaxialement aux canaux primaires 21a de façon à ce que les rondelles 41 exercent une légère pression sur les joints 40 toriques agencés sur les premières faces latérales 20.1 des embases 20B, 20C et sur les deuxièmes faces latérales des embases 20A, 20B lorsque les embases 20A, 20B, 20C sont fixées les unes aux autres.

Le dispositif comprend également des moyens de raccordement 50 étanches de l'extrémité du canal primaire 21a débouchant sur la face latérale 20.2 libre de l'embase 20C à une source de fluide sous pression. Les moyens de raccordement 50 comprennent un corps tubulaire 50.1 destiné à être raccordé à un conduit d'alimentation en air comprimé et au bout duquel s'étend une platine de fixation 50.2. La platine 50.2 est agencée pour être vissée sur la deuxième face latérale 20.2 de l'embase 20C via les deuxièmes vis 33.

Le dispositif 1 comprend aussi des moyens d'obturation étanche de l'extrémité du canal primaire 21a débouchant sur la face latérale 20.1 libre de l'embase 20A. Les moyens d'obturation comprennent un capot 51 agencé pour être vissé sur la première face latérale 20.1 de l'embase 20A de façon à exercer une légère pression sur le joint 40 torique agencé sur la première face latérale 20.1 de l'embase 20A. Le vissage du capot 51 sur l'embase 20A est réalisé en utilisant les mêmes interfaces de fixation que celles utilisées pour le vissage des rondelles 41 sur les embases 20B, 20C.

Les éjecteurs 10 sont ensuite rapportés sur les embases 20 de façon à ce que la face arrière 10.1 des éjecteurs 10 s'étende le long de la face avant 20.3 des embases afin de raccorder respectivement, de manière étanche, les orifices d'entrée 11 et les orifices d'aspiration 12 des éjecteurs 10 aux canaux secondaires 21b et aux canaux quaternaires 21d des embases 20.

Chacun des éjecteurs 10 est maintenu en position sur l'embase correspondante par deux vis 60 traversant ladite embase en passant par les trous 26.

L'extrémité libre du canal secondaire 21b des embases 20 est ici pourvue d'un clapet anti-retour à bille comprenant un état ouvert et un état fermé dans lequel la bille obstrue ladite extrémité libre lorsqu'aucun éjecteur 10 n'est raccordé au canal secondaire 21b. Le clapet anti-retour permet, lorsque l'une des embases est dépourvue d'éjecteur, de continuer à alimenter en fluide sous pression les autres éjecteurs.

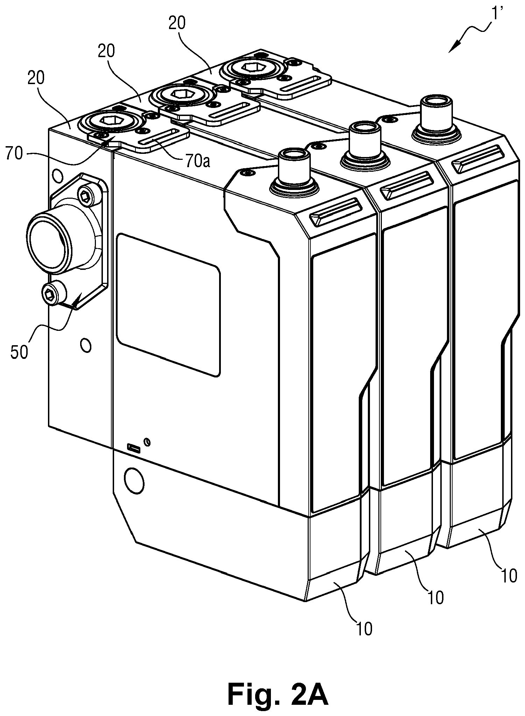

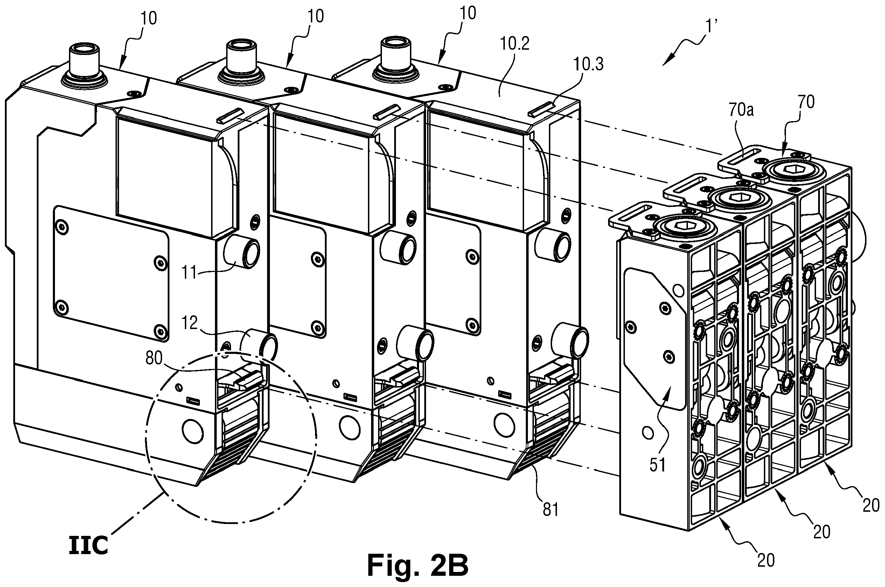

Les figures 2A, 2B illustrent un dispositif 1' fluidique qui n'est autre qu'une variante du dispositif 1 illustré aux figures 1A à 1D. Le dispositif 1' diffère du dispositif 1 en ce qu'il comprend des moyens de fixation des éjecteurs 10 sur les embases 20 par encliquetage. Ces moyens de fixation se substituent aux vis 60 du dispositif 1 et permettent de verrouiller et déverrouiller l'éjecteur 10 de l'embase 20 sans outil.

Les moyens de fixation comprennent trois lames 70 élastiquement déformables destinées chacune à être rapportée par vissage sur la face supérieure 20.4 des embases 20 pour s'étendre en saillie de la face avant 20.3 de ladite embase 20. Les lames 70 comportent une extrémité libre pourvue d'une lumière 70a agencée pour coopérer avec un relief 10.3 s'étendant sur la face supérieure 10.2 de l'éjecteur associé. Le relief 10.3 est sensiblement en forme de dent de sapin.

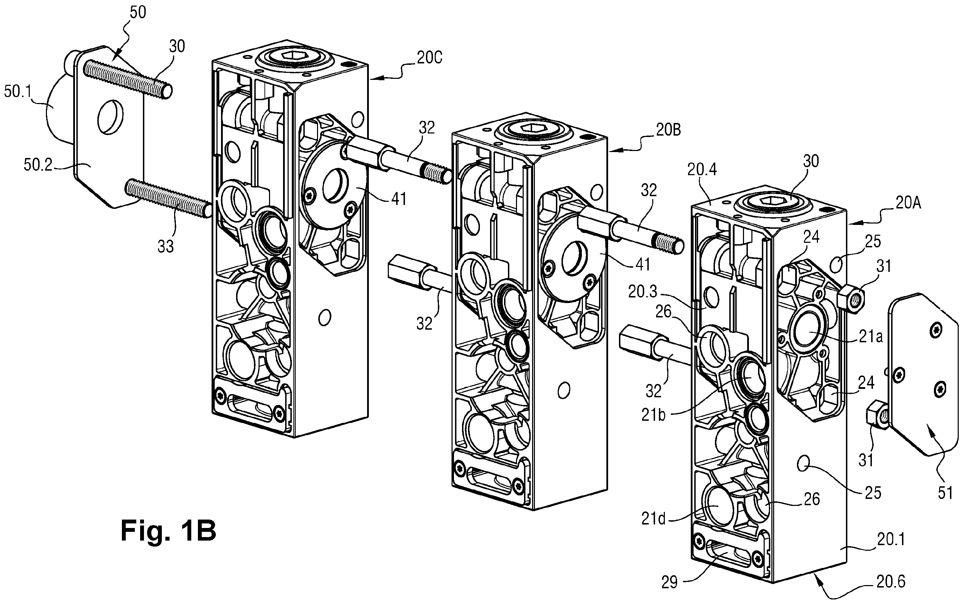

Par ailleurs, les éjecteurs 10 du dispositif 1' diffèrent des éjecteurs du dispositif 1 en ce qu'ils sont pourvus, en partie inférieure, d'un crochet 80 élastiquement déformable s'étendant en saillie de la face arrière 10.1 des éjecteurs 10. Le crochet 80 est monté mobile en rotation entre une position de déverrouillage et une position de verrouillage dans laquelle le crochet 80 coopère avec une lumière 29 de la face avant 20.3 d'une embase 20 (visible à la figure 1B) lorsque l'éjecteur 10 est connecté à ladite embase 20.

Le crochet 80 est lié mécaniquement à une gâchette 81 agencée pour amener le crochet 80 de la position de verrouillage vers la position de déverrouillage lorsqu'une pression est exercée sur ladite gâchette 81. La gâchette 81 forme ainsi un moyen de commande de l'encliquetage de l'éjecteur 10 sur l'embase 20.

Pour connecter un éjecteur 10 à une embase 20, l'éjecteur 10 est approché de l'embase 20 de manière à ce que la face arrière 10.1 de l'éjecteur 10 soit sensiblement parallèle à la face arrière 20.5 de l'embase 20 et que les orifices d'entrée 11 et d'aspiration 12 de l'éjecteur 10 soient respectivement en regard des extrémités des canaux secondaire 22b et quaternaire 21d débouchant sur la face avant 20.3 de l'embase 20, et cela jusqu' à ce que le relief 10.3 et le crochet 80 de l'éjecteur 10 coopèrent respectivement avec la lumière 70a de la lame 70 et la lumière 29 de l'embase 20. L'éjecteur 10 est dès lors fixé sans outil sur l'embase 20 par encliquetage.

Une pression exercée sur la gâchette 81 associée à un léger soulèvement de l'extrémité libre de la lame 70 permet de déconnecter sans outil l'éjecteur 10 de l'embase 20.

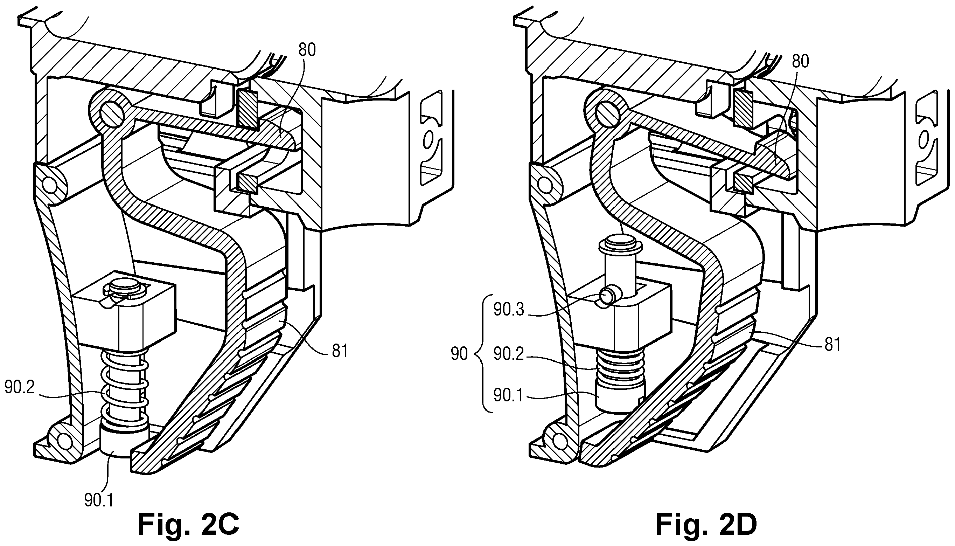

Avantageusement, l'éjecteur 10 peut être équipé, comme illustré aux figures 2C et 2D, d'un verrou 90 permettant de bloquer le pivotement de la gâchette 81 et ainsi empêcher toute déconnection intempestive de l'éjecteur 10.

Le verrou 90 comprend une tige 90.1 montée mobile en translation entre une position haute dans laquelle la tige 90.1 est inactive et une position basse dans laquelle la tige 90.1 s'oppose au pivotement de la gâchette permettant d'amener le crochet 80 de la position de verrouillage à la position de déverrouillage. La tige 90.1 est maintenue en position basse par un ressort 90.2 de compression formant un organe de rappel. Un effort de poussée exercé sur une extrémité inférieure de la tige tend à déplacer la tige de la position basse vers la position haute et ainsi libérer le pivotement de la gâchette 81. La tige 90.1 peut de façon connue en soi être maintenue en position haute par un verrouillage de type quart de tour rendu possible par un loquet 90.3 s'étendant en saille radiale de la tige 90.1.

La tige 90.1 est disposée à l'intérieur de l'éjecteur 10 de façon à ce que la position de ladite tige 90.1 ne puisse pas être modifiée sans l'utilisation d'un outil agencé pour pouvoir exercée un effort de poussée puis une rotation de ladite tige 90.1. L'extrémité inférieure de la tige 90.1 comporte ici une empreinte pour tournevis plat.

La figure 3 illustre un dispositif 2 fluidique comprenant un seul éjecteur 10 fixé sur une embase 20 et des moyens d'obturation étanches des extrémités du canal primaire 21a débouchant sur les faces latérales 20.1, 20.2 de l'embase 20A.

Les moyens d'obturation comprennent le capot 51 et un capot 52 agencés pour être respectivement vissés sur la première face latérale 20.1 et la deuxième face latérale 20.2 de l'embase 20A, de façon à exercer une légère pression sur les joints 40 toriques agencés de part et d'autre du canal primaire 21a.

Contrairement aux dispositifs 1, 1', l'extrémité libre du canal tertiaire 21c de l'embase 20 est dépourvue de l'obturateur 24 et est destiné à être raccordé à une source sous pression de fluide pour alimenter l'éjecteur 10 en air comprimé.

En variante, le capot 52 peut être remplacé par les moyens de raccordement 50 des dispositifs 1, 1' pour raccorder le canal primaire 21a de l'embase 20 à une source de fluide sous pression, l'extrémité libre du canal tertiaire 21c de l'embase 20 étant alors pourvue d'un obturateur 24.

Bien entendu, l'invention n'est pas limitée aux modes de réalisation décrits mais englobe toute variante entrant dans le champ de l'invention telle que définie par les revendications.

Le nombre d'embases et d'éjecteurs constituant le dispositif peut être égal à deux ou supérieur à 3.

Les vis de fixation peuvent être positionnées différemment et les moyens d'encliquetage peuvent avoir une structure différente de celle décrite.

Bien qu'ici les éjecteurs soient fixés sur les embases par vissage ou encliquetage, d'autres types de fixation peuvent être envisagés, comme l'utilisation de verrous montés sur un des éléments pour être déplaçables entre une position d'engagement avec un relief solidaire d'un élément adjacent et une position de dégagement vis-à-vis du relief.

Les modules peuvent avoir d'autres fonctions qu'une fonction d'éjecteur.

Les modules peuvent avoir des formes différentes les uns des autres, les conduits primaires débouchant sur les faces latérales en des positions relatives identiques pour se retrouver en regard les uns des autres lorsque les embases sont fixées au bâti.

Les moyens d'obturation 51 pourraient être remplacés par les moyens de raccordement 50 pour alimenter en air l'ensemble d'éjecteurs 10A, 10B, 10C et/ou alimenter un autre ensemble d'éjecteurs.

Bien qu'ici les trous 26 servent à fixer l'éjecteur 10 sur l'embase 20 via les vis 60, ils peuvent aussi servir à fixer l'embase 20 sur un châssis.

Bien qu'ici le moyen de commande de l'encliquetage, à savoir la gâchette 81, soit porté par l'éjecteur 10 pour en faciliter la manipulation, il peut aussi être porté par l'embase 20.

## Revendications

1. Dispositif (1) fluidique comprenant une pluralité d'embases individuelles et une pluralité de modules (10A, 10B, 10C) fonctionnels fluidiques fixés chacun sur une des embases individuelles (20A, 20B, 20C), chaque embase individuelle comportant :
- deux faces latérales (20.1, 20.2) parallèles par lesquelles les embases sont adaptées à être accolées les unes aux autres de telle manière que lorsque les embases sont accolées, deux des embases aient une face latérale libre ;
- un canal primaire (21a) de transport de fluide traversant l'embase pour déboucher sur les deux faces latérales en des positions relatives identiques ;
- une face avant (20.3) le long de laquelle s'étend le module afin de raccorder un canal d'entrée (11) dudit module à un canal secondaire (21b) s'étendant dans l'embase depuis la face avant et débouchant dans le canal primaire ;
- un clapet anti-retour ayant un état ouvert et un état fermé dans lequel le clapet est adapté à obturer le canal secondaire lorsque l'embase est dépourvue de module ; et
- une face supérieure (20.4) depuis laquelle s'étend un canal tertiaire (21c) débouchant dans le canal primaire ; le dispositif comprenant des moyens de fixation (31, 32, 33) des embases l'une à l'autre, des moyens de raccordement (40, 41) étanche des canaux primaires entre eux, des moyens de raccordement (40, 50) étanche d'une extrémité du canal primaire débouchant sur l'une des faces latérales libres adaptés à être raccordés à une source de fluide sous pression pour alimenter les modules, et des moyens de raccordement étanches de l'extrémité du canal tertiaire débouchant sur la face supérieure de l'embase adaptés à être raccordés à une source de fluide sous pression pour alimenter le module.

2. Dispositif fluidique selon la revendication 1, comprenant des moyens d'obturation (51) étanche de l'extrémité du canal primaire débouchant sur la face latérale libre dépourvue des moyens de raccordement.

3. Dispositif fluidique selon la revendication 2, comprenant des moyens d'obturation (30) étanche des extrémités des canaux tertiaires débouchant sur les faces supérieures des embases.

4. Dispositif fluidique selon l'une quelconque des revendications précédentes, dans lequel une face arrière (20.5) des embases et/ou les faces latérales (20.1, 20.2) comprennent des moyens de fixation (25, 27, 28) à un bâti.

5. Dispositif fluidique selon l'une quelconque des revendications précédentes, dans lequel les modules sont fixés aux embases par vissage.

6. Dispositif fluidique selon l'une quelconque des revendications 1 à 4, dans lequel les modules sont fixés aux embases par encliquetage.

7. Dispositif fluidique selon l'une quelconque des revendications précédentes, dans lequel au moins l'un des modules est un éjecteur.

8. Dispositif fluidique selon l'une quelconque des revendications précédentes, dans lequel les embases sont structurellement identiques.

9. Dispositif fluidique comprenant une embase individuelle et un unique module (10) fonctionnel fluidique fixé sur l'embase (20) individuelle comportant :
- deux faces latérales (20.1, 20.2) parallèles par lesquelles l'embase est adaptée à être accolée à deux autres embases ;
- un canal primaire (21a) de transport de fluide traversant l'embase pour déboucher sur les deux faces latérales en des positions identiques ;
- une face avant (20.3) le long de laquelle s'étend le module afin de raccorder un canal d'entrée dudit module à un canal secondaire (21b) s'étendant dans l'embase depuis la face avant et débouchant dans le canal primaire ;
- une face supérieure (20.4) depuis laquelle s'étend un canal tertiaire (21c) débouchant dans le canal primaire ;
- des moyens de fixation de l'embase à au moins une autre embase ; et
- des moyens de raccordement étanches de l'extrémité du canal tertiaire débouchant sur la face supérieure de l'embase adaptés à être raccordés à une source de fluide sous pression pour alimenter le module, **caractérisé en ce que** l'embase individuelle comporte un clapet anti-retour ayant un état ouvert et un état fermé dans lequel le clapet est adapté à obturer le canal secondaire lorsque l'embase est dépourvue de module.

10. Dispositif fluidique selon la revendication 9, comprenant des moyens de raccordement (50) étanche d'une extrémité du canal primaire débouchant sur l'une des faces latérales adaptés à être raccordés à une source de fluide sous pression pour alimenter le module.

11. Dispositif fluidique selon la revendication 10, comprenant des moyens d'obturation (51) étanche de l'extrémité du canal primaire débouchant sur la face latérale dépourvue des moyens de raccordement.

12. Dispositif fluidique selon la revendication 9, comprenant des moyens d'obturation (24) étanche de l'extrémité du canal tertiaire débouchant sur la face supérieure de l'embase.

13. Dispositif fluidique selon la revendication 9, comprenant des moyens d'obturation (51, 52) étanche des extrémités du canal primaire débouchant sur les faces latérales.

14. Dispositif fluidique selon l'une quelconque des revendications 9 à 13, dans lequel une face arrière (20.5) de l'embase et/ou les faces latérales comprennent des moyens de fixation (25, 27, 28) à un bâti.

15. Dispositif fluidique selon l'une quelconque des revendications 9 à 14, dans lequel le module est fixé à l'embase par vissage.

16. Dispositif fluidique selon l'une quelconque des revendications 9 à 14, dans lequel le module est fixé à l'embase par encliquetage.

17. Dispositif fluidique selon l'une quelconque des revendications 9 à 16, dans lequel le module est un éjecteur.

## Patentansprüche

1. Fluidvorrichtung (1), umfassend eine Vielzahl von einzelnen Basen und eine Vielzahl von funktionalen Fluidmodulen (10A, 10B, 10C), die jeweils an einer der einzelnen Basen (20A, 20B, 20C) befestigt sind, wobei jede einzelne Basis umfasst:
- zwei parallele Seitenflächen (20.1, 20.2), durch die die Basen geeignet sind, derart aneinander angefügt zu werden, dass, wenn die Basen aneinandergefügt sind, zwei Basen eine freie Seitenfläche haben;
- einen primären Fluidtransportkanal (21a), der die Basis durchsetzt, um auf den beiden Seitenflächen in identischen relativen Positionen zu münden;
- eine Vorderseite (20.3), entlang der sich das Modul erstreckt, um einen Einlasskanal (11) des Moduls mit einem sekundären Kanal (21b) zu verbinden, der sich in der Basis von der Vorderseite ab erstreckt und in den primären Kanal mündet;
- ein Rückschlagventil, das einen offenen Zustand und einen geschlossenen Zustand hat, in dem das Ventil geeignet ist, den sekundären Kanal zu verschließen, wenn die Basis ohne Modul ist; und
- eine Oberseite (20.4), ab der sich ein tertiärer Kanal (21c) erstreckt, der in den primären Kanal mündet;
wobei die Vorrichtung Befestigungsmittel (31, 32, 33) zum Befestigen der Basen aneinander umfasst, dichte Verbindungsmittel (40, 41) zum dichten Verbinden der primären Kanäle miteinander, dichte Verbindungsmittel (40, 50) zum dichten Verbinden eines auf einer der freien Seitenflächen mündenden Endes des primären Kanals, die geeignet sind, mit einer Druckfluidquelle verbunden zu werden, um die Module zu versorgen, und dichte Verbindungsmittel zum Verbinden des auf der Oberseite der Basis mündenden Endes des tertiären Kanals, die geeignet sind, mit einer Druckfluidquelle verbunden zu werden, um das Modul zu versorgen.

2. Fluidvorrichtung, nach Anspruch 1, umfassend dichte Verschlussmittel (51) zum dichten Verschließen des Endes des primären Kanals, das auf der freien Seitenfläche ohne Verbindungsmittel mündet.

3. Fluidvorrichtung nach Anspruch 2, umfassend dichte Verschlussmittel (30) zum dichten Verschließen der Enden der tertiären Kanäle, die auf den Oberseiten der Basen münden.

4. Fluidvorrichtung nach einem der vorhergehenden Ansprüche, bei der eine Rückseite (20.5) der Basen und /oder die Seitenflächen (20.1, 20.2) Befestigungsmittel (25, 27, 28) zum Befestigen an einem Gestell umfassen.

5. Fluidvorrichtung nach einem der vorhergehenden Ansprüche, bei der die Module an den Basen durch eine Schraubverbindung befestigt sind.

6. Fluidvorrichtung nach einem der Ansprüche 1 bis 4, bei der die Module an den Basen durch eine Rastverbindung befestigt sind.

7. Fluidvorrichtung nach einem der vorhergehenden Ansprüche, bei der mindestens eines der Module ein Ejektor ist.

8. Fluidvorrichtung nach einem der vorhergehenden Ansprüche, bei der die Basen strukturell identisch sind.

9. Fluidvorrichtung, umfassend eine einzelne Basis und ein einziges funktionales Fluidmodul (10), das an der einzelnen Basis (20) befestigt ist, die umfasst:
- zwei parallele Seitenflächen (20.1, 20.2), durch die die Basis geeignet ist, an zwei weiteren Basen angefügt zu werden;
- einen primären Fluidtransportkanal (21a), der die Basis durchsetzt, um auf den beiden Seitenflächen in identischen Positionen zu münden;
- eine Vorderseite (20.3), entlang der sich das Modul erstreckt, um einen Einlasskanal des genannten Moduls mit einem sekundären Kanal (21b) zu verbinden, der sich in der Basis ab der Vorderseite erstreckt und in den primären Kanal mündet;
- eine Oberseite (20.4), ab der sich ein tertiärer Kanal (21c) erstreckt, der in den primären Kanal mündet;
- Befestigungsmittel zum Befestigen der Basis an mindestens einer anderen Basis; und
- dichte Verbindungsmittel zum dichten Verbinden des auf der Oberseite der Basis mündenden Endes des tertiären Kanals, die geeignet sind, mit einer Druckfluidquelle verbunden zu werden, um das Modul zu versorgen,
**dadurch gekennzeichnet, dass** die einzelne Basis ein Rückschlagventil umfasst, das einen offenen Zustand und einen geschlossenen Zustand hat, in dem das Ventil geeignet ist, den sekundären Kanal zu verschließen, wenn die Basis ohne Modul ist.

10. Fluidvorrichtung nach Anspruch 9, umfassend dichte Verbindungsmittel (50) zum dichten Verbinden eines auf einer der Seitenflächen mündenden Endes des primären Kanals, die geeignet sind, mit einer Druckfluidquelle verbunden zu werden, um das Modul zu versorgen.

11. Fluidvorrichtung nach Anspruch 10, umfassend dichte Verschlussmittel (51) zum dichten Verschließen des Endes des primären Kanals, das auf der Seitenfläche ohne Befestigungsmittel mündet.

12. Fluidvorrichtung nach Anspruch 9, umfassend dichte Verschlussmittel (24) zum dichten Verschließen des Endes des tertiären Kanals, das auf der Oberseite der Basis mündet.

13. Fluidvorrichtung nach Anspruch 9, umfassend dichte Verschlussmittel (51, 52) zum dichten Verschließen der Enden des Hauptkanals, die auf den Seitenflächen münden.

14. Fluidvorrichtung nach einem der Ansprüche 9 bis 13, bei der eine Rückseite (20.5) der Basis und/oder die Seitenflächen Befestigungsmittel (25, 27, 28) zur Befestigung an einem Gestell umfassen.

15. Fluidvorrichtung nach einem der Ansprüche 9 bis 14, bei der das Modul an der Basis durch eine Schraubverbindung befestigt ist.

16. Fluidvorrichtung nach einem der Ansprüche 9 bis 14, bei der das Modul an der Basis durch eine Rastverbindung befestigt ist.

17. Fluidvorrichtung nach einem der Ansprüche 9 bis 16, bei der das Modul ein Ejektor ist.

## Claims

1. A fluid flow device (1) comprising a plurality of fluid flow functional modules (10A, 10B, 10C) each fastened on a respective individual base (20A, 20B, 20C) comprising:
· two parallel lateral faces (20.1, 20.2) via which the bases are adapted to be placed against one another in such a manner that when the bases are placed against one another, two of the bases each have one lateral face that is free;
· a primary fluid transport channel (21a) passing through the base to open out in its two lateral faces in identical relative positions;
· a front face (20.3) along which the module extends so as to couple an inlet channel (11) of said module with a secondary channel (21b) extending inside the base from the front face and opening out in the primary channel;
· a check valve having both an open state and also a closed state in which the check valve closes the secondary channel when the base is not provided with a module; and
· a top face (20.4) in which there extends a tertiary channel (21c) opening out in the primary channel;
the device including a fastener means (31, 32, 33) for fastening the bases to one another, leaktight coupling means (40, 41) for coupling primary channels with one another, leaktight coupling means (40, 50) for coupling an end of the primary channel opening out in one of the free lateral faces to a source of fluid under pressure in order to feed the modules, and leaktight coupling means for coupling the end of the tertiary channel opening out in the top face of the base to a source of fluid under pressure in order to feed the module.

2. A fluid flow device according to claim 1, including leaktight shutter means (51) for closing the end of the primary channel opening out in the free lateral face that does not have coupling means.

3. A fluid flow device according to claim 2, including leaktight shutter means (30) for closing the ends of the tertiary channels opening out in the top faces of the bases.

4. A fluid flow device according to any preceding claim, wherein a rear face (20.5) of each base and/or its lateral faces (20.1, 20.2) include fastener means (25, 27, 28) for fastening to a support.

5. A fluid flow device according to any preceding claim, wherein the modules are fastened to the bases by screw fastening.

6. A fluid flow device according to any one of claims 1 to 4, wherein the modules are fastened to the bases by snap fastening.

7. A fluid flow device according to any preceding claim, wherein at least one of the modules is an ejector.

8. A fluid flow device according to any preceding claim, wherein the bases are structurally identical.

9. A fluid flow device comprising a single fluid flow functional module (10) fastened on an individual base (20) comprising:
· two parallel lateral faces (20.1, 20.2) whereby the base is adapted to be placed against two other bases;
· a primary fluid transport channel (21a) passing through the base to open out in its two lateral faces in identical positions;
· a front face (20.3) along which the module extends so as to couple an inlet channel of said module with a secondary channel (21b) extending inside the base from the front face and opening out in the primary channel;
· a check valve having both an open state and also a closed state in which the check valve closes the secondary channel when the base is not provided with a module;
· a top face (20.4) in which there extends a tertiary channel (21c) opening out in the primary channel;
· fastener means for fastening the base to at least one other base; and
· leaktight coupling means for coupling the end of the tertiary channel opening out in the top face of the base to a source of fluid under pressure for feeding the module.

10. A fluid flow device according to claim 9, including leaktight coupling means (50) for coupling an end of the primary channel opening out in one of the lateral faces to a source of fluid under pressure for feeding the module.

11. A fluid flow device according to claim 10, including leaktight shutter means (51) for closing the end of the primary channel opening out in the lateral face that does not have coupling means.

12. A fluid flow device according to claim 9, including leaktight shutter means (24) for closing the end of the tertiary channel opening out in the top face of the base.

13. A fluid flow device according to claim 9, including leaktight shutter means (51, 52) for closing the ends of the primary channel opening out in the lateral faces.

14. A fluid flow device according to any one of claims 9 to 13, wherein a rear face (20.5) of the base and/or the lateral faces include fastener means (25, 27, 28) for fastening to a support.

15. A fluid flow device according to any one of claims 9 to 14, wherein the module is fastened to the base by screw fastening.

16. A fluid flow device according to any one of claims 9 to 14, wherein the module is fastened to the base by snap fastening.

17. A fluid flow device according to any one of claims 9 to 16, wherein the module is an ejector.
